# EUROPÄISCHE PATENTANMELDUNG

(11) **EP 0 813 910 A2**
(43) Veröffentlichungstag der Anmeldung: **29.12.1997**
(21) Anmeldenummer: 96111885.8
(22) Anmeldetag: 24.07.1996
(51) Int. Cl.: B05B 15/04

(54) **Schaumstoffstreifen**

(30) Priorität: 18.06.1996 DE 29610642 U
(71) Anmelder: VOSSCHEMIE GmbH, D-25436 Uetersen (DE)
(72) Erfinder: Voss, Klaus-Wilhelm, 25436 Uetersen (DE)
(74) Vertreter: Richter, Werdermann & Gerbaulet

(57) **Zusammenfassung**

Zum Abdichten und zum Abdecken eines Spaltes, insbesondere zwischen einem feststehenden und einem beweglichen Karosserieteil eines Kraftfahrzeuges, unabhängig von seiner Breite, wird ein Schaumstoffstreifen (100) eingesetzt, dessen Oberfläche teilweise mit einer Klebeschicht (24) versehen ist und der an einer vorbestimmten Stelle einen derartigen Knick (14) aufweist, daß ein erster und ein zweiter Schaumstoffstreifenschenkel (10,12) ausgebildet wird, um beim Einfügen in den abzudichtenden Spalt den Schaumstoffstreifen mit dem Querschnitt der Schenkel einführen zu können, wobei nach dem Einführen die gesamte Länge des Schaumstoffstreifens über beide Schenkel den Schaumstoffstreifen am Austreten aus dem Spalt hindert und somit gleichzeitig eine dichtende Haltekraft durch die zusammengedrückten Schenkel bietet, so daß der Spalt abgedeckt ist.

## Beschreibung

Die Erfindung betrifft einen Schaumstoffstreifen, dessen Oberfläche teilweise mit einer Klebeschicht versehen ist, eine Vorrichtung zum Einbringen eines Schaumstoffstreifens in einen abzudichtenden Spalt, eine Verwendung des Schaumstoffstreifens zur Spaltabdichtung bzw. als Abdichtungselement, ein Verfahren zum Einbringen eines Schaumstoffstreifens in einen abzudichtenden Spalt, eine Anordnung von Schaumstoffstreifen, und einen Applikator zum Einbringen eines Schaumstoffprofils, insbesondere eines T-förmigen Schaumstoffprofils, das an wenigstens einer Seite mit einer Klebeschicht versehen ist, in einen abzudichtenden Spalt oder eine abzudichtende Fuge, insbesondere in eine Spalte bzw. Fuge zwischen einem feststehenden Karosserieteil und einem beweglichen Karosserieteil von Kraftfahrzeugen.

Zur Verwendung als Dicht- und/oder Abdeckstreifen z.B. bei der Teillackierung von Fahrzeugen o.dgl. sind zahlreiche Ausführungsformen von Schaumstoffstreifen bekannt. Dabei soll nicht nur das Eindringen von Farbnebel in einen Spalt von Karosserieteilen verhindert werden. Vielmehr gilt es auch zu verhindern, daß beim Übersprühen von Farbnebel Schmutzteile aus den Fugen durch Luftwirbelung herausgeschleudert werden. Derartige Schmutzpartikel können sich auf dem frisch aufgebrachten Lack absetzten und zu einer fehlerhaften Lackstelle führen.

So sind z.B. Schaumstoffstreifen mit einem rechteckigen Querschnitt bekannt, wobei eine Seite des Schaumstoffstreifens mit einer Klebeschicht versehen ist, um den Streifen an der gewünschten Stelle des abzudichtenden Objekts zu frieren. Derartige Streifen finden auch Anwendung bei der Abdichtung von Fenstern und Türen.

Auch andere Querschnittsprofile sind durch den Stand der Technik offenbart, wie kreis- oder annähernd kreisförmige Schaumstoffstreifen, die ebenfalls eine Klebeschicht zur Fixierung aufweisen. Diese Streifen können zur Erhöhung der Kompressibilität auch als Hohlkörper ausgebildet sein.

Nachteilig bei den bekannten Schaumstoffstreifen zum Dichten und Abdecken ist es jedoch, daß die Anwendungsmöglichkeiten eines bestimmten Schaumstoffstreifens auf eine bestimmte Problemstellung eingeschränkt sind, da durch die Dimensionierung und plastische Ausformung des jeweiligen Schaumstoffstreifens dieser nur für eine definierte Fugenbreite o.dgl. verwendbar ist.

Weiterhin ist das An- bzw. Einbringen der Streifen in einen abzudichtenden Spalt schwierig und umständlich, da für einen festen Halt des Schaumstoffstreifens dieser erheblich größer als der abzudichtende Spalt sein muß. Diese Übergröße muß jedoch zunächst durch den sehr viel engeren Spalt gedrückt werden.

Es ist daher Aufgabe der Erfindung, Schaumstoffstreifen, insbesondere zur Verwendung als Dicht- und/oder Abdeckstreifen zu schaffen, sowie eine Anordnung von Schaumstoffstreifen zur Verfügung zu stellen, die universell einsetzbar sind, d.h. nahezu weitgehend unabhängig von der Breite des zu dichtenden oder abzudeckenden Spaltes bei beliebigen Objekten, sowie ein Verfahren, eine Vorrichtung und einen Applikator zum Einbringen des Schaumstoffstreifens zur Verfügung zu stellen, die eine einfache Montage des Streifens ermöglichen.

Diese Aufgabe wird bei einem Schaumstoffstreifen der obengenannten Art durch die im Patentanspruch 1 gekennzeichneten Merkmale, bei einer Verwendung des Schaumstoffstreifens durch die im Anspruch 17 genannten Merkmale, bei einer Vorrichtung zum Einbringen eines Schaumstoffstreifens durch die im Anspruch 18 genannten Merkmale, bei einem Verfahren zum Einbringen eines Schaumstoffstreifens durch die im Anspruch 22 genannten Merkmale, bei einer Anordnung der Schaumstoffstreifen durch die im Anspruch 27 genannten Merkmale, und einem Applikator der obengenannten Art durch die kennzeichnenden Merkmale in Anspruch 33 gelöst.

Dazu ist es erfindungsgemäß vorgesehen, einen Schaumstoffstreifen zu schaffen, dessen Oberfläche teilweise mit einer Klebeschicht versehen ist, wobei der Schaumstoffstreifen an einer vorbestimmten Stelle einen derartigen Knick hat, daß er einen ersten und einen zweiten Schenkel aufweist. Dies hat den Vorteil, daß der Schaumstoffstreifen beim Einfügen in einen abzudichtenden Spalt lediglich mit dem Querschnitt der Schenkel einzuführen ist, während nach dem Einführen, die gesamte Länge des Schaumstoffstreifens über beide Schenkel den Schaumstoffstreifen am Austreten aus dem Spalt hindert und somit gleichzeitig eine dichtende Haltekraft durch die zusammengedrückten Schenkel bietet.

Durch das Vorsehen eines längeren und eines kürzeren Schenkels wird in vorteilhafter Weise das Einführen des kürzeren Schenkels und somit die Montage des erfindungsgemäßen Schaumstoffstreifens erleichtert.

Das Ausbilden von Verformungsnuten, beispielsweise als Biege-, Dehnfuge oder -nut ergibt in besonders vorteilhafter Weise einen hochflexiblen Schaumstoffstreifen, bei dem das Einführen in den Spalt erleichtert ist, bei gleichzeitiger Beibehaltung ausreichender Halte- und Dichtkräfte des in den Spalt eingebauten Schaumstoffstreifens.

Dadurch, daß der Knick einen Winkel von genau 90 Grad hat, wird die gerade und gleichmäßige Aufbringung des Klebestreifens gewährleistet. So erzielt man eine gleichmäßige Kontur und gewährleistet eine vollständige und abdichtende Auflage in dem abzudichtenden Spalt.

Durch das Vorsehen von Klebeschichten an einem oder beiden Schenkeln und dort jeweils an einer oder mehreren Stellen werden in vorteilhafter Weise zusätzlich Haltestellen durch Klebeverbindungen in der Spalte geschaffen, die einen sicheren und gut dichtenden Halt des Schaumstoffstreifens gewährleisten.

Ein über die gesamte Länge des Schaumstoffstreifens konstanter Querschnitt erlaubt ein einfaches und schnelles Einsetzen des Schaumstoffstreifens in einen abzudichtenden Spalt.

In besonders vorteilhafter Weise erstreckt sich wenigstens ein Schenkel beidseitig bezüglich des entsprechenden anderen Schenkels, wodurch ein T-förmiges Profil entsteht, so daß eine noch bessere Abdichtung gewährleistet ist.

Es ist weiterhin erfindungsgemäß vorgesehen, den vorgenannten Schaumstoffstreifen zur Spaltabdichtung bzw. als Abdichtungselement, insbesondere zur Abdichtung von Spalten bzw. Fugen zwischen einem feststehenden Karosserieteil und einem beweglichen Karosserieteil von Kraftfahrzeugen zu verwenden. Dies hat den Vorteil, daß die zeitraubende Arbeit des Abklebens und Abdichtens vor dem Lackieren insbesondere von Kraftfahrzeugteilen verkürzt und vereinfacht wird, was zu niedrigeren Kosten führt.

Es ist ferner erfindungsgemäß vorgesehen, eine Vorrichtung zum Einbringen eines vorgenannten Schaumstoffstreifens in einen abzudichtenden Spalt oder eine abzudichtende Fuge, insbesondere in eine Spalte bzw. Fuge zwischen einem feststehenden Karosserieteil und einem beweglichen Karosserieteil von Kraftfahrzeugen zu schaffen, welche aus einem Stab mit vorbestimmter Breite besteht, die größer ist als die Dicke des Stabes, so daß eine flache Ober- und Unterseite gebildet wird, wobei auf der Unterseite eine senkrecht zu dieser ausgerichtete Erhebung und an der Oberseite eine diese bedeckende Antihaftschicht, insbesondere Silikonpapier, angeordnet ist.

Durch das Ausbilden des Abstands zwischen einem Ende des Stabes und der Erhebung entsprechend etwa der Länge des ersten Schenkels des Schaumstoffstreifens ergibt sich eine einfache Handhabung der Vorrichtung, da nicht abgeschätzt werden muß, wie weit der Stab einzusetzen ist, sondern statt dessen der Stab einfach bis zum Anschlag eingeführt wird.

Andruckpolster an wenigstens einem Ende des Stabes unterstützen in vorteilhafter Weise das Andrücken des in dem Spalt angeordneten Schenkels des Schaumstoffstreifens und verhindern mögliche Beschädigungen des Schaumstoffstreifens beim Andrücken.

Dadurch, daß auch die Unterseite mit einer Antihaftschicht, insbesondere Silikonpapier, versehen ist, wird die Arbeit des Einfügens und Lösens des Schaumstoffstreifens erleichtert, da die Klebeschicht dazu neigt, bei geringster Berührung beispielsweise mit einem Karosserieblech an diesem anzuhaften und so gegebenenfalls zum vollständigen Einsetzen des Schaumstoffstreifens in einen abzudichtenden Spalt wieder gelöst werden muß.

Es ist weiterhin erfindungsgemäß vorgesehen, ein Verfahren zum Einbringen eines vorgenannten Schaumstoffstreifens in einen abzudichtenden Spalt oder eine abzudichtende Fuge, insbesondere in eine Spalte bzw. Fuge zwischen einem feststehenden Karosserieteil und einem beweglichen Karosserieteil von Kraftfahrzeugen vorzuschlagen, mit folgenden Schritten,
(a) Einsetzen des ersten Schenkels in den abzudichtenden Spalt,
(b) Herstellen einer Haftverbindung zwischem dem ersten Schenkel und einer ersten Spaltwandung, insbesondere eines Karosserieteils, und
(c) Einschieben des zweiten Schenkels in den abzudichtenden Spalt.

Dies hat den Vorteil, daß beim Einsetzen des Schaumstoffstreifens nur der Querschnitt der Schenkel durch den abzudichtenden Spalt zu führen ist.

Das Herstellen einer Haftverbindung zwischen dem zweiten Schenkel und einer der ersten Spaltwandung gegenüberliegenden zweiten Spaltwandung in einem weiteren Schritt verbessert den Halt des Schaumstoffstreifens und die Abdichtung durch diesen.

In besonders vorteilhafter Weise wird in Schritt (b) die vorgenannte Vorrichtung in den Spalt zwischen dem zweiten Schenkel und der zweiten Spaltwandung eingeführt, bis die Erhebung am Spalteingang in Anschlag kommt, und die Vorrichtung um einen Drehpunkt am Anschlag der Erhebung gedreht wird, so daß das eingeführte Ende der Vorrichtung den ersten Schenkel gegen die erste Spaltwandung drückt. Dies ermöglicht eine schnelle und einfache Ausführung des Schrittes (b).

Die Verwendung der vorgenannten Vorrichtung in Schritt (c) durch Ansetzen eines Endes dieser Vorrichtung an der Knickstelle des Schaumstoffstreifens, und Eindrücken der Vorrichtung in den Spalt, so daß der zweite Schenkel in den abzudichtenden Spalt eingeschoben wird, erlaubt in vorteilhafter Weise ein genaues und sicheres Plazieren des Schaumstoffstreifens in dem abzudichtenden Spalt.

Dadurch, daß vor Schritt (a) das bewegliche Karosserieteil um 20 Grad bis 50 Grad, insbesondere um 30 Grad bis 45 Grad, insbesondere um 30 Grad oder um 45 Grad geöffnet und nach Schritt (b) wieder geschlossen wird, kann der Schaumstoffstreifen einfach und direkt von Hand appliziert werden.

Es ist ferner erfindungsgemäß vorgesehen, eine Anordnung von vorgenannten Schaumstoffstreifen vorzuschlagen, wobei wenigstens zwei Schaumstoffstreifen derart zueinander ausgerichtet sind, daß das dem Knick abgewandte Ende des ersten Schenkels eines Schaumstoffstreifens jeweils an den Knickbereich eines weiteren Schaumstoffstreifens stößt, wobei die ersten Schenkel der Schaumstoffstreifen zueinander Fluchten, und wobei die Schaumstoffstreifen an diesen Stoßstellen über eine Sollreißbrücke miteinander zu einer Kette verbunden sind.

Das Vorsehen von Trennkerben im Bereich der Stoßstellen unterstützt in vorteilhafter Weise ein einfaches Vereinzeln der Schaumstoffstreifen durch Abreißen der Sollreißbrücken.

Ein erfindungsgemäßer Applikator ist derart ausgebildet, daß der Applikator an einem Ende eine Führungsschiene aufweist, die ein dem Klebestreifen abgewandtes Ende des Schaumstoffprofils derart umschließt, daß das Schaumstoffprofil entlang und in der Schiene und vor einem Austritt aus der Schiene in senkrechter Richtung zu dieser gesichert führbar ist, wobei die Schiene einen Längsschlitz aufweist, aus dem ein die Klebeschicht tragendes Ende des Schaumstoffprofils herausragt, wobei ferner entlang des Längsschlitzes ein erster Anschlag ausgebildet ist, der den aus dem Längsschlitz ragenden Teil des Schaumstoffprofils an einer der Klebeschicht gegenüberliegenden Seite abstützt, und wobei weiterhin an einer dem Längsschlitz abgewandten Seite der Führungsschiene ein Griffstück angeordnet ist. Dies ergibt in vorteilhafter Weise eine Vorrichtung, mit der ein Schaumstoffprofil einfach und schnell in eine Fuge oder einen Spalt applizierbar ist.

Durch einen zweiten Anschlag, der an einem der Führungsschiene zugewandten Ende des Griffstucks angeordnet ist, erzielt man in besonders vorteilhafter Weise eine einfache Handhabung, da die Einschubtiefe des Schaumstoffprofils durch den Anschlag festgelegt ist und nicht manuell justiert werden muß.

Ein verstellbarer zweiter Anschlag ermöglicht dabei in vorteilhafter Weise eine Anpassung des Applikators an verschiedene Spalt- bzw. Fugenarten.

Ein bezüglich des ersten Anschlages aogewinkeltes Griffstück verbessert in besonders vorteilhafter Weise die Handhabung des Applikators.

Dadurch, daß an einem der Führungsschiene abgewandten Ende des Griffstückes eine Antihaftschicht angeordnet ist, kann das Griffstück zusätzlich zum vollständigen Einschieben des Schaumstoffprofils in den Spalt verwendet werden. Dies vermindert die Anzahl der benötigten Werkzeuge zum Anbringen des Schaumstoffprofils.

Gleitpolster am ersten und/oder zweiten Anschlag verhindern ein Verkratzen der benachbarten Karosserieteile.

Weitere vorteilhafte Ausgestaltungen sind in den Unteransprüchen gekennzeichnet.

Nachstehend wird die Erfindung anhand von Zeichnungen näher erläutert. Es zeigen
- Fig. 1 bis 3: in einer geschnittenen Ansicht eine erste Ausführungsform des erfindungsgemäßen Schaumstoffstreifens in verschiedenen Anordnungen beim Einbau in einen Spalt zweier Karosserieteile,
- Fig. 4 und 5: in einer geschnittenen Ansicht eine zweiten Ausführungsform des erfindungsgemäßen Schaumstoffstreifens in verschiedenen Anordnungen beim Einbau in einen Spalt zweier Karosserieteile,
- Fig. 6 bis 8: in einer geschnittenen Ansicht eine dritte Ausführungsform des erfindungsgemäßen Schaumstoffstreifens in verschiedenen Anordnungen beim Einbau in einen Spalt zweier Karosserieteile, mit einer Einbauhilfe,
- Fig. 9 bis 11: in einer geschnittenen Ansicht eine vierte Ausführungsform des erfindungsgemäßen Schaumstoffstreifens in verschiedenen Anordnungen beim Einbau in einen Spalt zweier Karosserieteile, mit einer Einbauhilfe,
- Fig. 12: in einer Seitenansicht eine Anordnung von Schaumstoffstreifen von Figuren 4 und 5,
- Fig. 13: in einer Seitenansicht eine Anordnung von Schaumstoffstreifen von Figuren 1 bis 3,
- Fig. 14: in einer Seitenansicht eine Anordnung von Schaumstoffstreifen von Figuren 9 bis 11,
- Fig. 15: in einer Seitenansicht eine Anordnung von Schaumstoffstreifen von Figuren 6 bis 8,
- Fig. 16 und 17: in einer Seitenansicht weitere Anordnungen von weiteren Schaumstoffstreifen.
- Fig. 18 und 19: in einer geschnittenen Ansicht eine fünfte Ausführungsform des erfindungsgemäßen Schaumstoffstreifens,
- Fig. 20: in einer Seitenansicht eine Anordnung von Schaumstoffstreifen von Figur 18 und 19,
- Fig. 21: eine perspektivische Ansicht eines erfindungsgemäßen Applikators,
- Fig 21A, 21B und 21C: die Anwendung des Applicators gemäß Fig. 21 für die Anbringung eines Schaumstoffstreifens im Spalt zwischen der Motorhaube eines Fahrzeuges und dem vorderen Kotflügel,
- Fig. 22: in einer Schnittansicht die Anwendung des erfindungsgemäßen Applikators,
- Fig. 23: eine zweite Ausführungsform des erfindungsgemäßen Applikators, und
- Fig. 24: eine dritte Ausführungsform des erfindungsgemäßen Applikators.

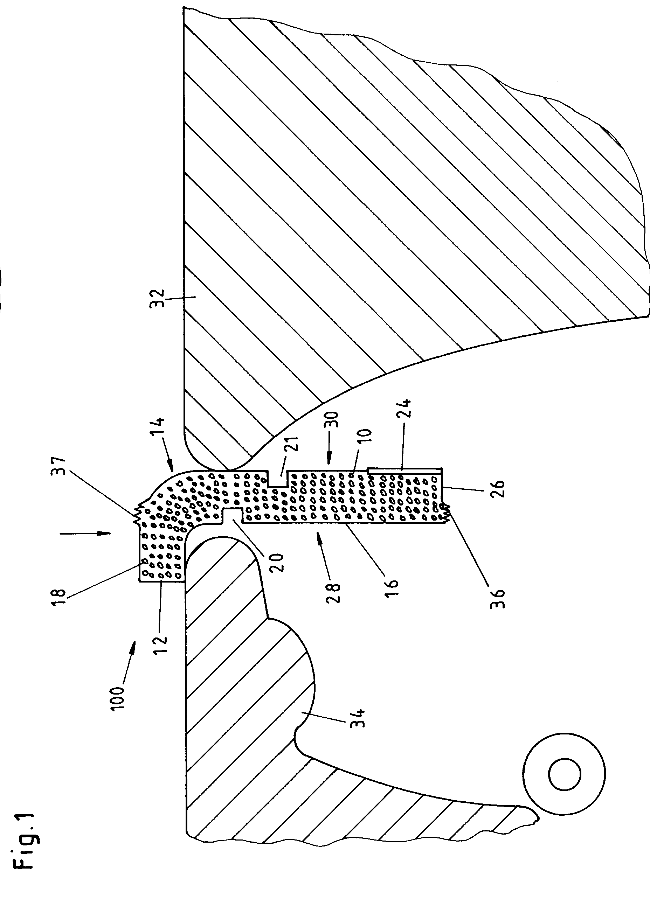

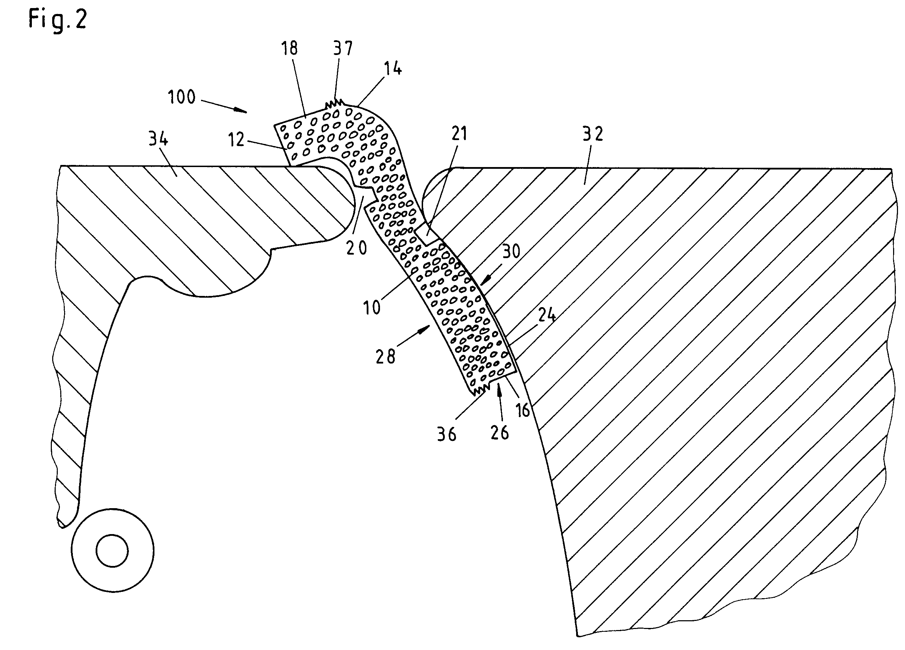

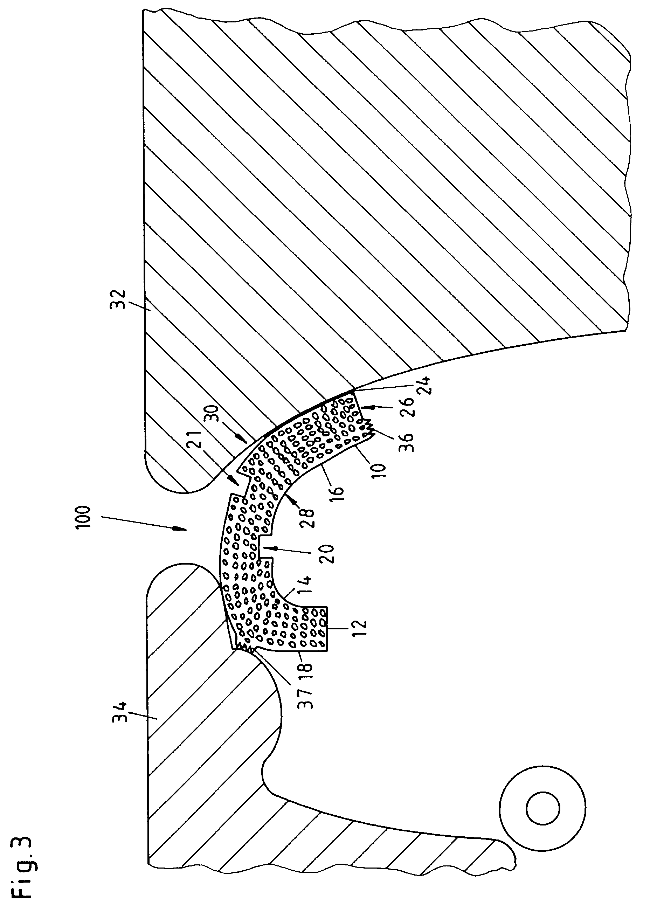

Figuren 1 bis 3 zeigen in einer geschnittenen Ansicht eine erste Ausführungsform des erfindungsgemäßen Schaumstoffstreifens 100 in verschiedenen Anordnungen beim Einbau in einen Spalt zweier Karosserieteile 32,34. In Figur 1 ist der Schaumstoffstreifen 100 mit seinem langen Schenkel 16 in einen abzudichtenden Spalt eingeschoben. Der kurze Schenkel 18 liegt außen auf dem Karosserieteil 34 auf. Der Schaumstoffstreifen 100 weist zwei Verformungsnuten 20,21 und einen Klebeschicht 24 am Ende 26 auf der Seite 30 des Schenkel 16 auf. Beim andrücken des Schenkels 16 (Figur 2) entsteht eine Klebeverbindung zwischen dem Schenkel 16 und dem Karosserieteil 32, die den Schaumstoffstreifen 100 in seiner Position hält. Anschließend wird der Schenkel 18 durch den Spalt gedrückt (Figur 3). Durch die elastische Federkraft des Schaumstoffteils 100 drückt sich dieses, an der Klebestelle abstützend, gegen das Karosserieteil 34. Die Verformungsnuten 20,21 unterstützen die elastische Verformung des Schaumstoffstreifens 100. Diese Nuten wirken, je nach Einbauzustand, als Dehn- oder Kompressions- bzw. Stauchnuten oder -fugen. In Figur 3 ist die dichtende Verbindung zwischen dem Schaumstoffstreifen 100 und den Karosserieteilen 32, 34 hergestellt, der Einbau des Schaumstoffstreifens 100 abgeschlossen.

Wie aus den Figuren 1 bis 3 ersichtlich, sind zum Einbau des Schaumstoffstreifens 100 lediglich drei einfache Schritte notwendig. Dies vereinfacht den Einbau des erfindungsgemäßen Schaumstoffstreifens 100 erheblich gegenüber bekannten Schaumstoffstreifen.

Der Schaumstoffstreifen 100 weist weiterhin Abrißkanten 36,37 auf. Diese rühren von der kettenartigen Anordnung der Schaumstoffstreifen vor ihrem Einbau her, wie später noch beschrieben wird. Insbesondere die Abrißkante 37 hat in der vorliegenden Ausführungsform die zusätzliche Wirkung, ein Zurückschnellen des Schenkels 18 aus der Position in Figur 3 zu verhindern.

Die Klebeschicht 24 kann ein Haftkleber sein, wie beispielsweise ein druckempfindlicher Klebstoff, vorzugsweise ein sog. Hot-Melt-Klebstoff.

Als Schaumstoff wird vorzugsweise ein offenzelliger Weichschaumstoff aus Polyurethan mit einem Raumgewicht von 25 - 35 kg/m³ eingesetzt, aber auch andere Schaumstoffe, wie Polyester-, Polystyrol-, PVC-, Polyethylen- Polyisocyanat-, Polyphenol- und Silikonschäume sind verwendbar.

Die Schaumstoffstreifen werden vorzugsweise aus entsprechenden Blöcken herausgeschnitten.

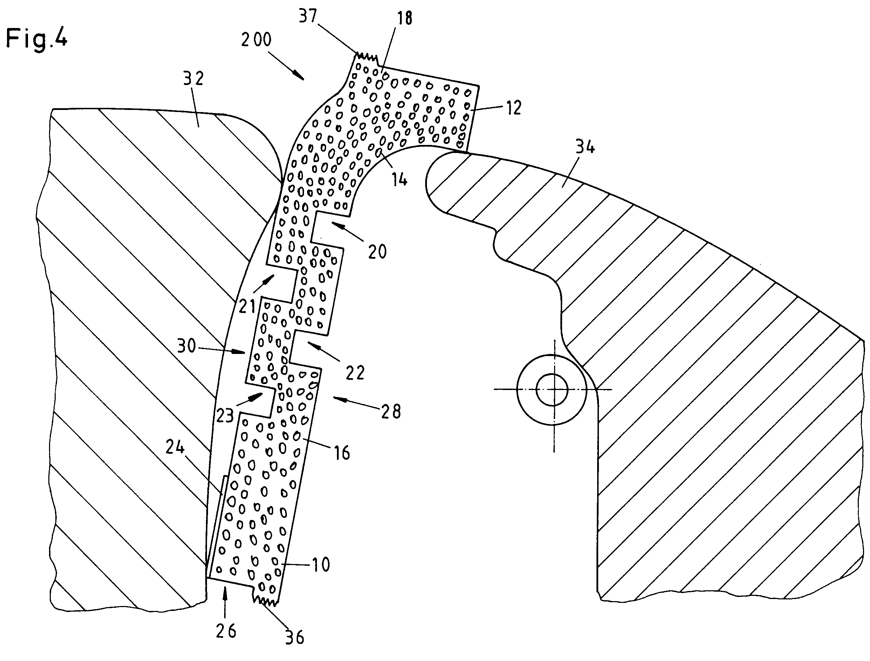

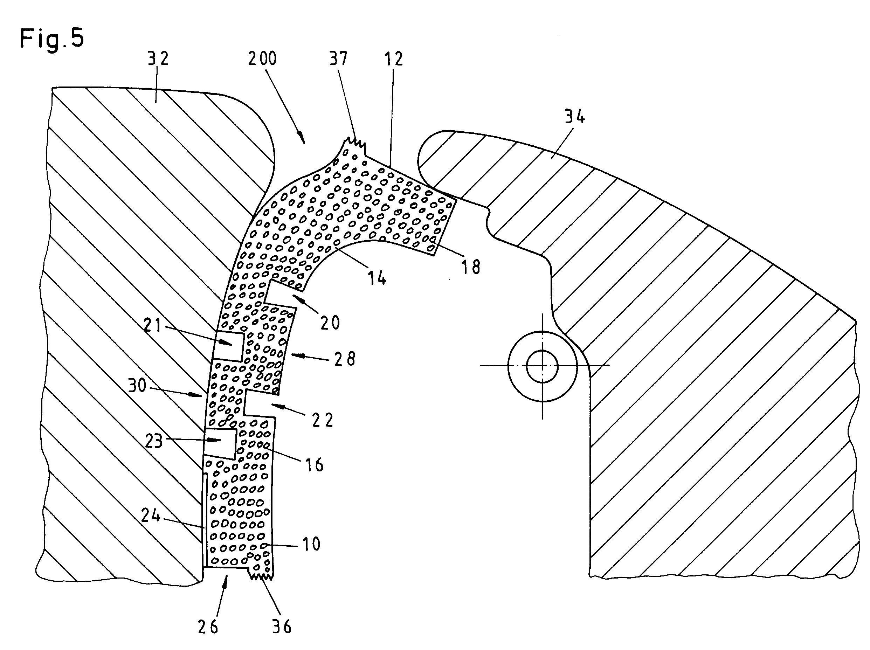

Figuren 4 und 5 zeigen in einer geschnittenen Ansicht eine zweiten Ausführungsform des erfindungsgemäßen Schaumstoffstreifens 200 in verschiedenen Anordnungen beim Einbau in einen Spalt zweier Karosserieteile 32,34, analog zu den Figuren 1 bis 3. Dieser Schaumstoffstreifen 200 entspricht im wesentlichen dem Schaumstoffstreifen 100 aus Figuren 1 bis 3, jedoch weist er vier Verformungsnuten 20,21,22,23 auf und der lange Schenkel 16 ist im Verhältnis zum kurzen Schenkel 18 noch etwas länger. Die Anordnung des Schaumstoffstreifens und seine Position mit entsprechender Dichtfunktion entspricht der anhand der Figuren 1 bis 3 bereits beschriebenen Situation.

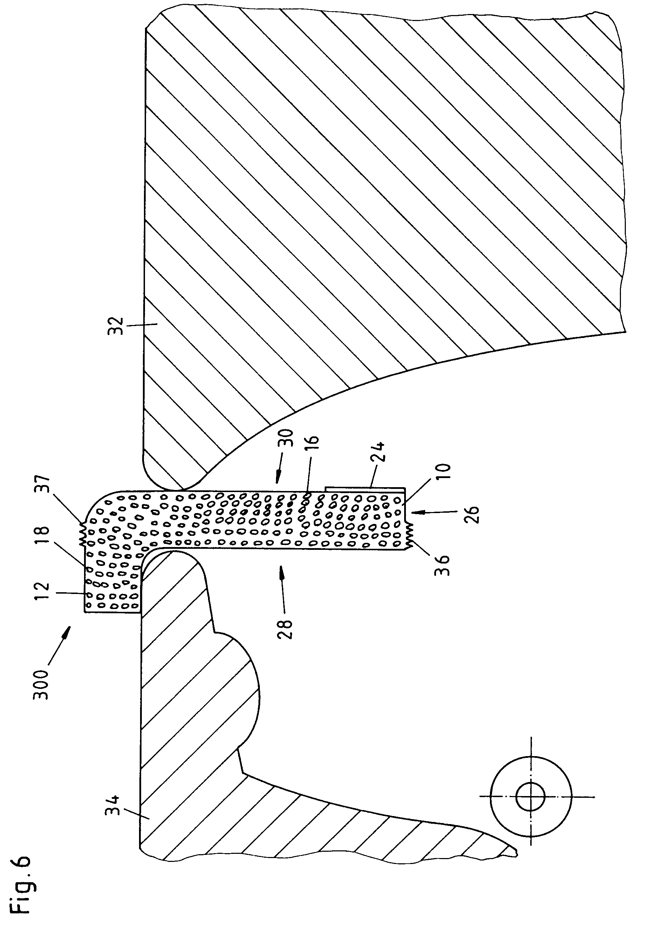

Figuren 6 bis 8 zeigen in einer geschnittenen Ansicht eine dritte Ausführungsform des erfindungsgemäßen Schaumstoffstreifens 300 in verschiedenen Anordnungen beim Einbau in einen Spalt zweier Karosserieteile 32,34 analog zu den Figuren 1 bis 3. Dieser Schaumstoffstreifen 300 entspricht im wesentlichen dem Schaumstoffstreifen 100 aus Figuren 1 bis 3, jedoch weist er keine Verformungsnuten auf. Die Anordnung des Schaumstoffstreifens und seine Position mit entsprechender Dichtfunktion entspricht der anhand der Figuren 1 bis 3 bereits beschriebenen Situation.

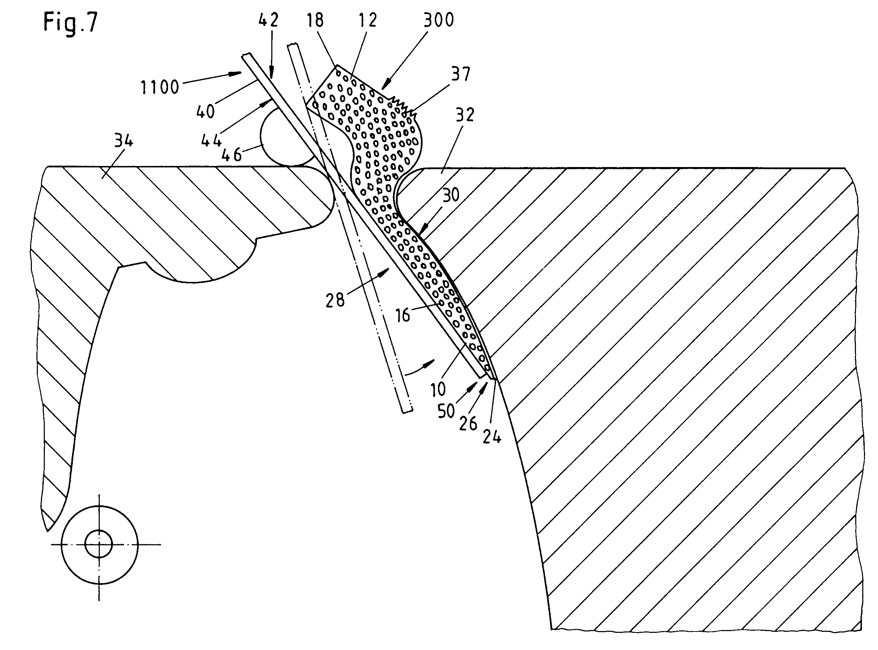

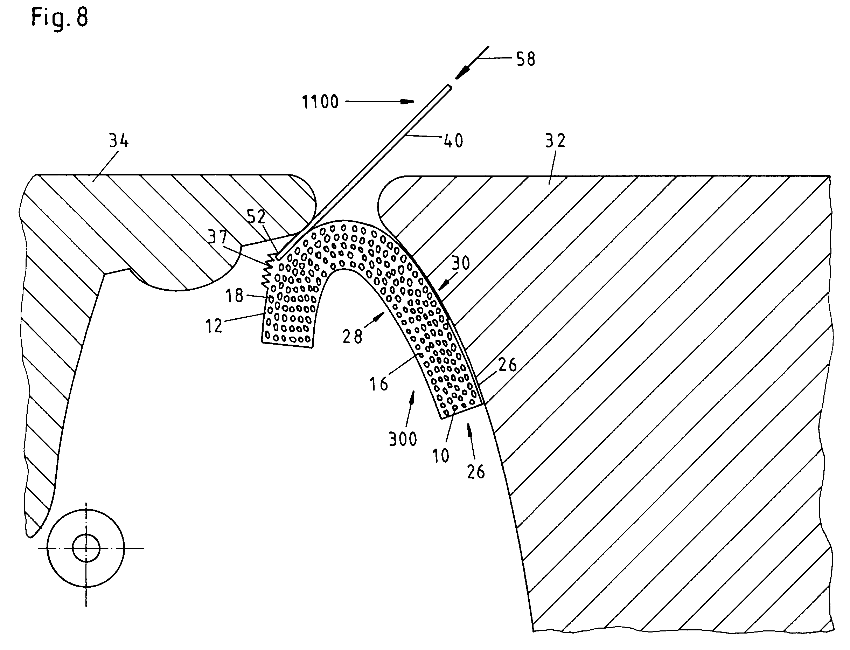

Figuren 7 und 8 zeigen zusätzlich den Einsatz einer Vorrichtung 1100 zum Einbringen eines Schaumstoffstreifens 300 in den Spalt. Nach dem Einschieben des Schaumstoffstreifens 300 in den Spalt (Figur 6) wird ein Ende 52 der Vorrichtung 1100 in den Spalt zwischen dem Schaumstoffstreifen 300 und dem Karosserieteil 34 eingeschoben, bis eine Erhebung 46 eines Stabes 40 der Vorrichtung 1100 am Karosserieteil 34 zum Anschlag kommt (Figur 7). Der Abstand zwischen der Erhebung 46 und dem Ende 52 des Stabes 40 entspricht der Länge des Schenkels 16 des Schaumstoffstreifens 300. Somit ist die Vorrichtung 1100 dann, wenn die Erhebung zum Anschlag kommt, genau so positioniert, daß bei Drehung der Vorrichtung um den Anschlagpunkt bei der Erhebung 46 das Ende 52 des Stabes 40 genau den Teil des Schenkels 16 gegen das Karosserieteil 32 drückt, an dem die Klebeschicht 24 angeordnet ist. Hierdurch wird eine feste Klebeverbindung zwischen dem Schenkel 16 und dem Karosserieteil 32 hergestellt.

Anschließen wird der Stab 40 wieder herausgezogen und an der Knickstelle hinter der Abrißkante 37 angesetzt (Figur 8). Durch das schieben des Stabes 40 in Pfeilrichtung 58 wird schließlich der Schenkel 18 in den Spalt eingedrückt und dichtet, wie bereits im Zusammenhang mit Figuren 1 bis 3 beschrieben, durch elastische Federkraft den Spalt ab.

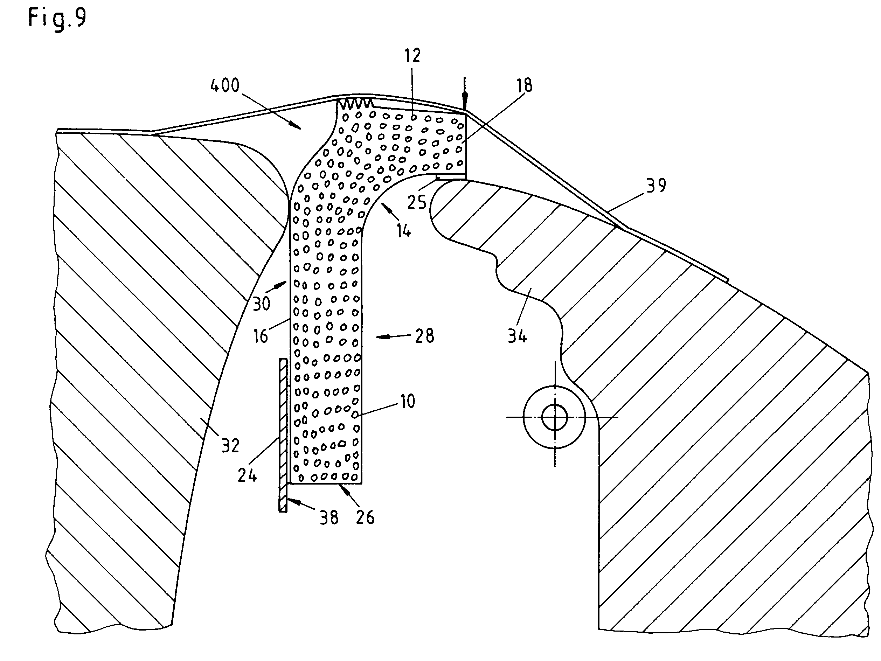

Figuren 9 bis 11 zeigen in einer geschnittenen Ansicht eine vierte Ausführungsform des erfindungsgemäßen Schaumstoffstreifens 400 in verschiedenen Anordnungen beim Einbau in einen Spalt zweier Karosserieteile 32,34 analog zu den Figuren 1 bis 3. Dieser Schaumstoffstreifen 400 entspricht im wesentlichen dem Schaumstoffstreifen 100 aus Figuren 1 bis 3, jedoch weist er keine Verformungsnuten aber zusätzlich eine Klebeschicht 25 am Schenkel 18 auf. Die Anordnung des Schaumstoffstreifens 400 und seine Position mit entsprechender Dichtfunktion entspricht der anhand der Figuren 1 bis 3 bereits beschriebenen Situation.

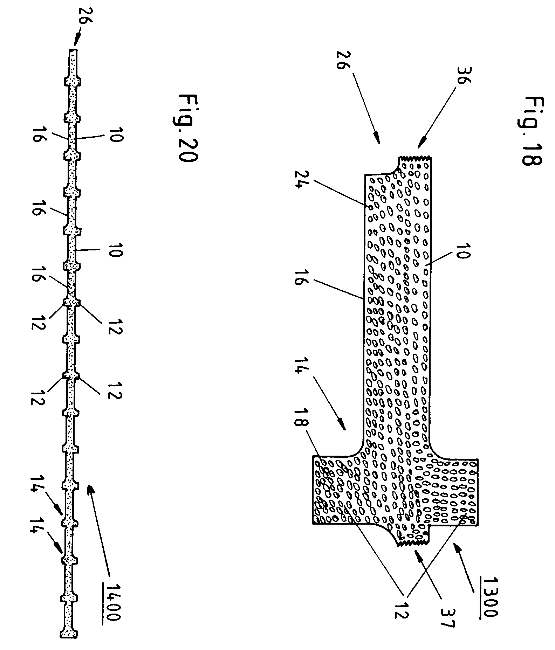

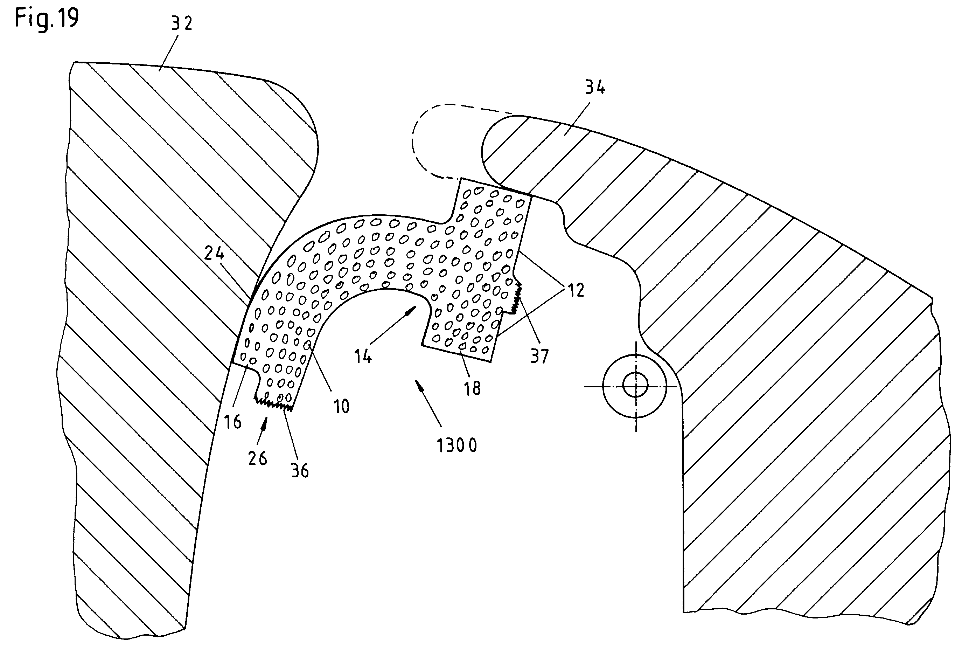

Figuren 18 und 19 zeigen in einer geschnittenen Ansicht eine fünfte Ausführungsform des erfindungsgemäßen Schaumstoffstreifens 1300. Dieser Schaumstoffstreifen 1300 entspricht im wesentlichen dem Schaumstoffstreifen 100 aus Figuren 1 bis 3, jedoch erstreckt sich ein Schenkel 12 beidseitig bezüglich des Schenkels 10, so daß ein T-förmiges Profil entsteht.

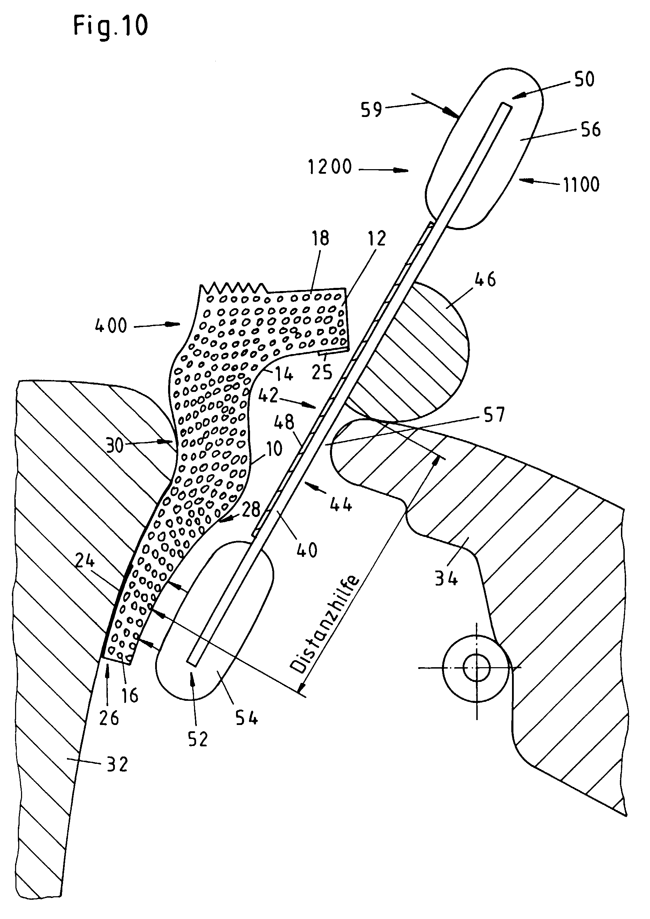

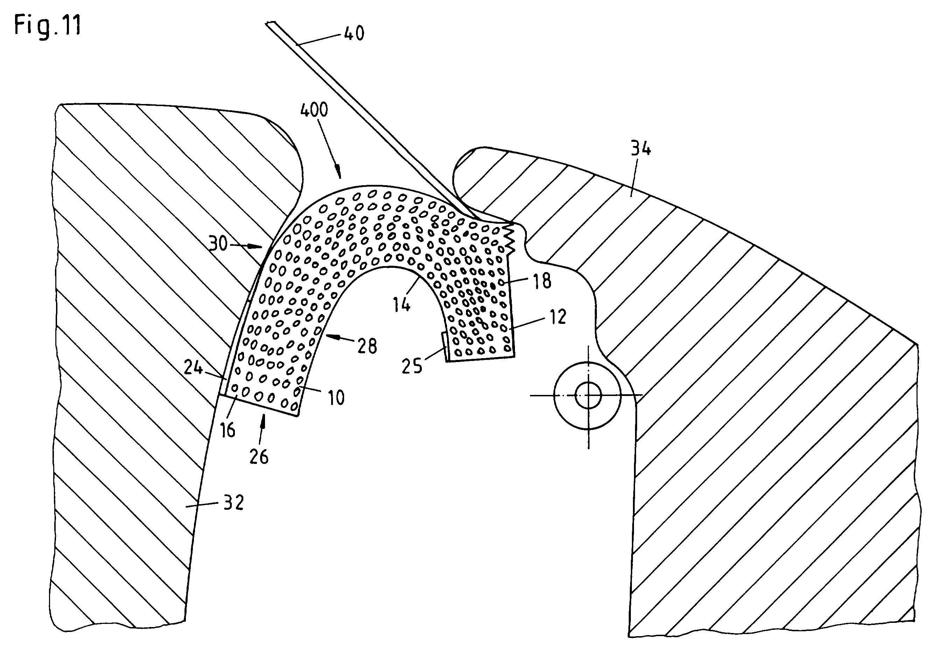

In Figur 10 ist eine zweite Ausführung der Vorrichtung 1200 zum Einbringen des Schaumstoffstreifens 400 dargestellt. Zusätzlich zur Vorrichtung 1100 von Figur 7, weist diese Ausführungsform Andruckpolster 54,56 und eine Antihaftschicht 48 auf. Die Antihaftschicht 48 soll ein Artkleben des Stabes 40 an der Klebeschicht 25 verhindern. Die Andruckpolster 54,56 unterstützen des Andrücken des Schenkels 16 an das Karosserieteil 32 beim Druck auf die Vorrichtung 1200 in Pfeilrichtung 59 und verhindert gleichzeitig eine Beschädigung des Schenkels 16. Figur 11 zeigt wiederum die Endposition des eingebauten Schaumstoffstreifens 400.

Wie insbesondere aus Figur 10 ersichtlich, dient die Erhebung 46 nicht nur als Distanzhilfe zur richtigen Positionierung des Andruckpolsters 54, sondern auch als Hebelabrollkante. Die Hebelwirkung entfaltet sich um einen Drehpunkt 57 am Karosserieteil 34. Der Stab 40 hat vorzugsweise eine Breite von etwa 10cm.

Figur 9 zeigt weiterhin eine alternative Befestigung des Schaumstoffstreifens 400. Die Klebeschicht 24 ist von einem Papierstreifen 38 abgedeckt, der vorzugsweise eine silikonisierte Oberfläche hat. Dadurch läßt er sich leicht für die in Figuren 10 und 11 gezeigten Schritte abziehen. In der alternativen Befestigungsmethode in Figur 9, wird jedoch nicht die Klebeschicht 24 verwendet, sondern eine Klebeschicht 25 schafft einen Klebeverbund mit dem Karosserieteil 34. Zusätzlich sichert ein Klebestreifen 39, vorzugsweise ein Tesakreppband, den Halt des Schaumstoffstreifens 400 für einen dichtenden Sitz. Der Kleberpunkt 25 hat vorzugsweise eine Fläche von 5x5mm².

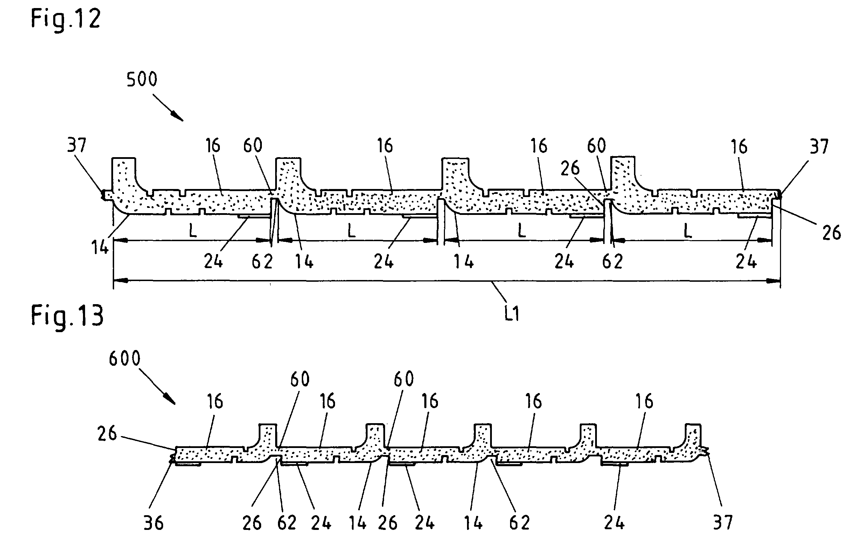

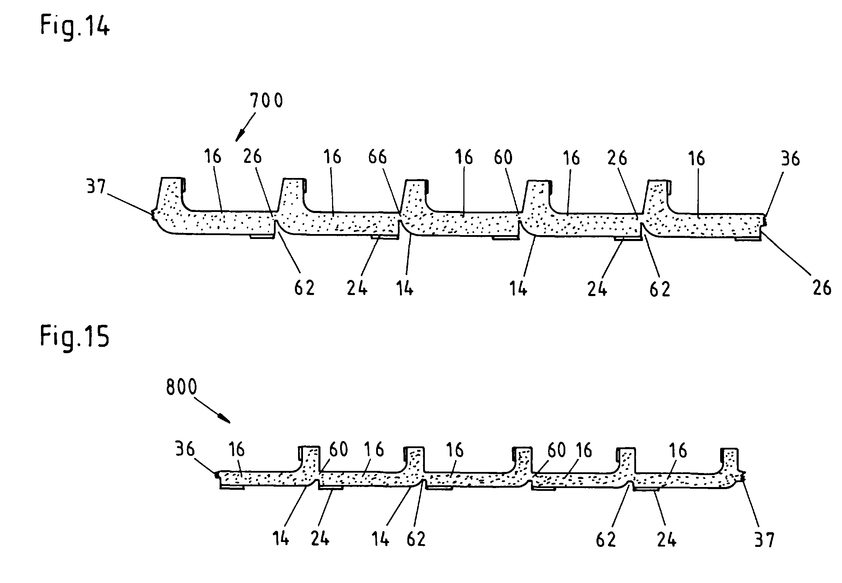

Figuren 12 bis 17 und 20 sind Seitenansichten von Anordnungen 500, 600, 700, 800, 900, 1000 und 1400 jeweils der Schaumstoffstreifen 100, 200, 300, 400, 1300. Die langen Schenkel 16 sind fluchtend zueinander derart ausgerichtet, daß ihr eines Ende 26 an einen nächsten Schaumstoffstreifen im Bereich der Knickstelle 14 stößt. Dort sind jeweils zwei benachbarte Schaumstoffstreifen mittels einer Sollreißbrücke 60 miteinander verbunden. Bei der Verwendung der Schaumstoffstreifen werden diese nacheinander von derartigen Ketten abgerissen. An jedem Schaumstoffstreifen bleiben dann die oben erwähnten Abrißkanten 36,37 zurück. An den Sollreißbrücken 60 sind Trennkerben 62 angeordnet.

Das Profil der Schaumstoffstreifen hat vorzugsweise folgende Abmessungen: Eine Dicke bzw. Querschnitt der Schenkel von 1mm bis 10mm, vorzugsweise 4mm und 6mm. Eine Länge des langen Schenkels 16 inklusive Knickstelle 14 von 20mm bis 50mm, vorzugsweise 25mm, 26mm, 30mm und 40mm. Eine Breite der Trennkerben 62 von 0,5mm bis 5mm, vorzugsweise 1mm und 2mm. Eine Länge des kurzen Schenkels 18 inklusive Knickstelle von 5mm bis 20mm, vorzugsweise 10mm und 14mm. Eine Dicke der Sollreißbrücken transversal zu den Schenkeln 62 von 1mm bis 5mm, vorzugsweise 2mm und 3mm. Eine Breite der Sollreißbrücken 60 in Richtung der Schenkel 16,18 von 0,5mm bis 5mm, vorzugsweise 1mm und 2mm. Eine Länge der Klebeschichten 24,25 von 5mm bis 10mm, vorzugsweise 6mm und 8mm.

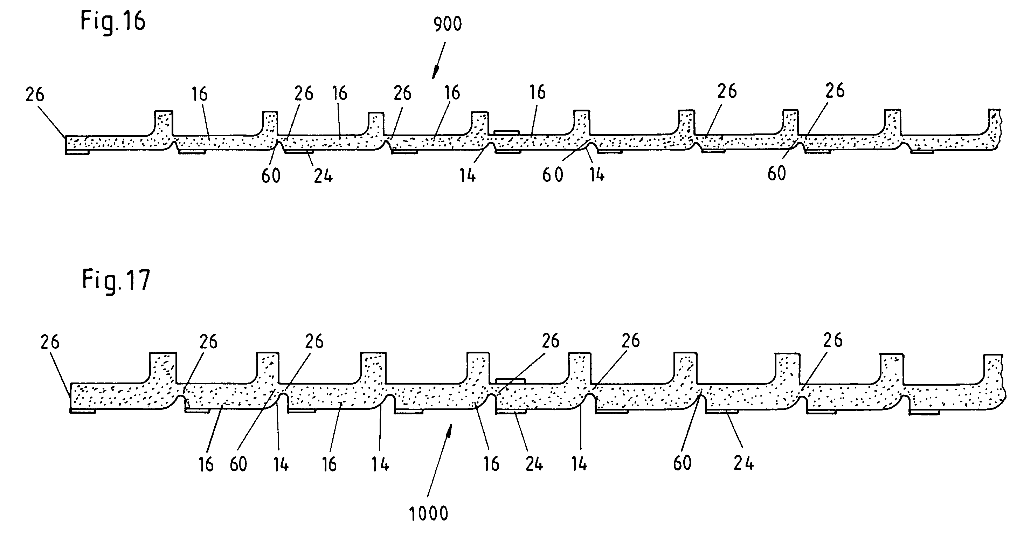

Wie aus Figuren 16 und 17 ersichtlich, kann die Klebeschicht 24 auch beidseitig des Schenkels 16 angeordnet sein.

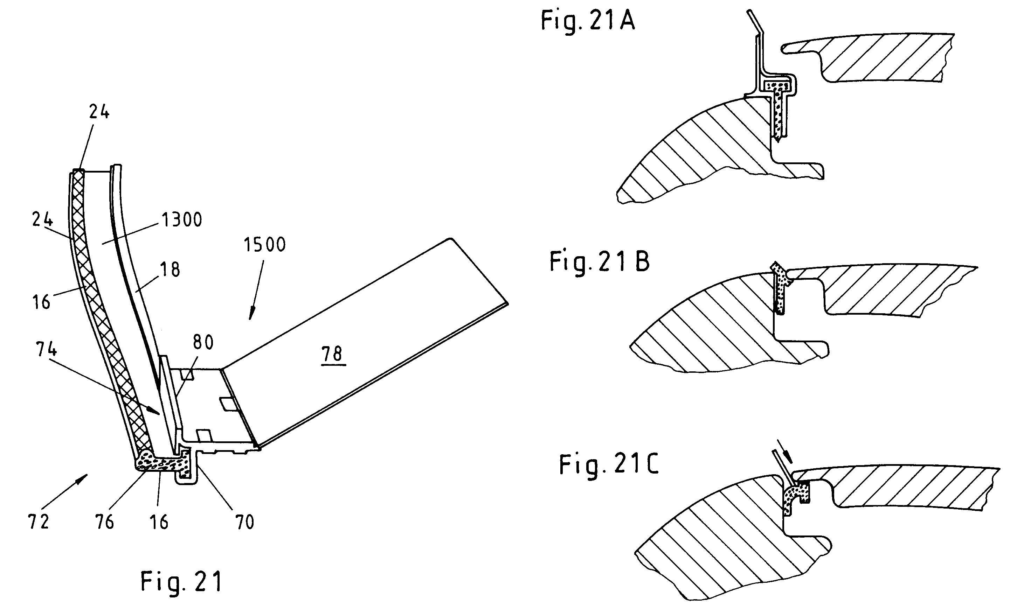

Figur 21 zeigt einen erfindungsgemäßen Applikator 1500, der an einem T-Streifen 1300 angesetzt wird. Dazu weist der Applikator eine Führungsschiene 70 auf. Diese ist derart ausgebildet, daß sie die kurzen Schenkel 18 des T-förmigen Schaumstoffstreifens 1300 umschließt. Dadurch kann der Applikator entlang des Schaumstoffstreifens 1300 geführt werden, jedoch ist ein Herausgleiten des Schaumstoffprofils 1300 aus der Schiene verhindert.

Aus einem Längsschlitz 74 ragt ein langer Schenkel 16 des Schaumstoffprofils 1300 heraus, der eine Klebeschicht 24 trägt. Auf der der Klebeschicht 24 gegenüberliegenden Seite des langen Schenkels 16 ist ein erster Anschlag 76 angeordnet. Weiterhin ist ein zweiter Anschlag 80 vorgesehen. An der Führungsschiene ist ferner ein Griffstück 78 ausgebildet.

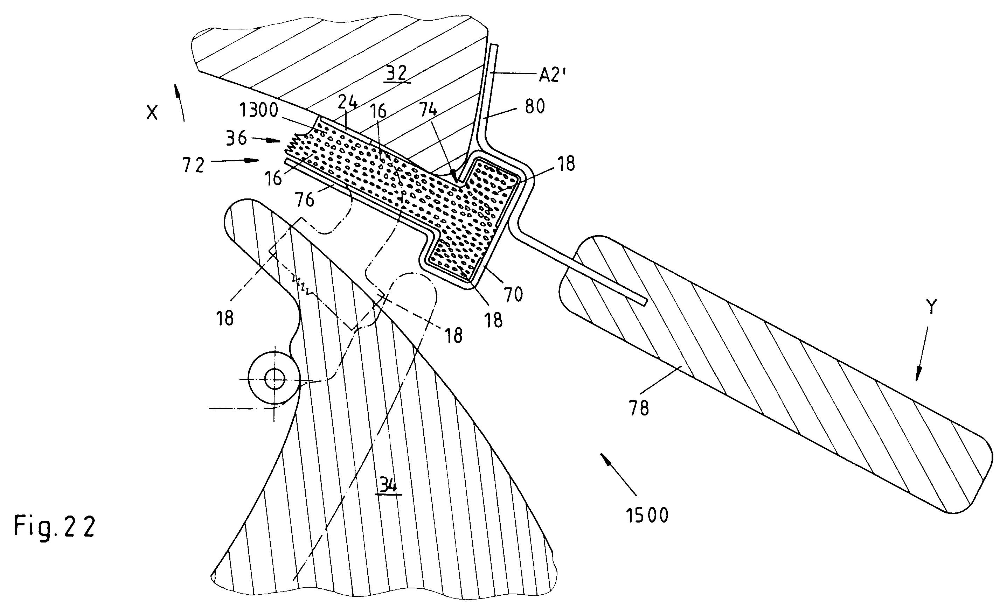

Figur 22 stellt sie Applikation des Schaumstoffstreifens 1300 mittels des erfindungsgemäßen Applikators 1500 dar. Der in der Schiene 70 und am ersten Anschlag anliegende Schaumstoffstreifen 1300 wird mit seinem langen Schenkel 16 in einen Spalt eingeführt. Der zweite Anschlag 80 begrenzt dabei die Einführtiefe, so daß diese vorbestimmt und immer gleich ist. Drückt man nun auf das Griffstück 78 in Pfeilrichtung y, dann drückt der erste Anschlag 76 den langen Schenkel 16 mit der Klebeschicht 24 gegen das Karosserieteil 32. Der Klebestreifen 24 haftet dann am Karosserieteil 32.

Der Applikator wird nun entlang des abzudichtendes Spaltes entlanggeführt und befestigt so über eine gewünschte Länge den Schaumstoffstreifen 1300 in dem Spalt.

Wie durch gestrichelte Linien in Figur 22 angedeutet, wird das Karosserieteil 34 dann in eine Schließposition gebracht und die kurzen Schenkel 18 des Schaumstoffstreifens in den Spalt hineingedrückt. Somit ist eine Spaltabdichtung fertiggestellt.

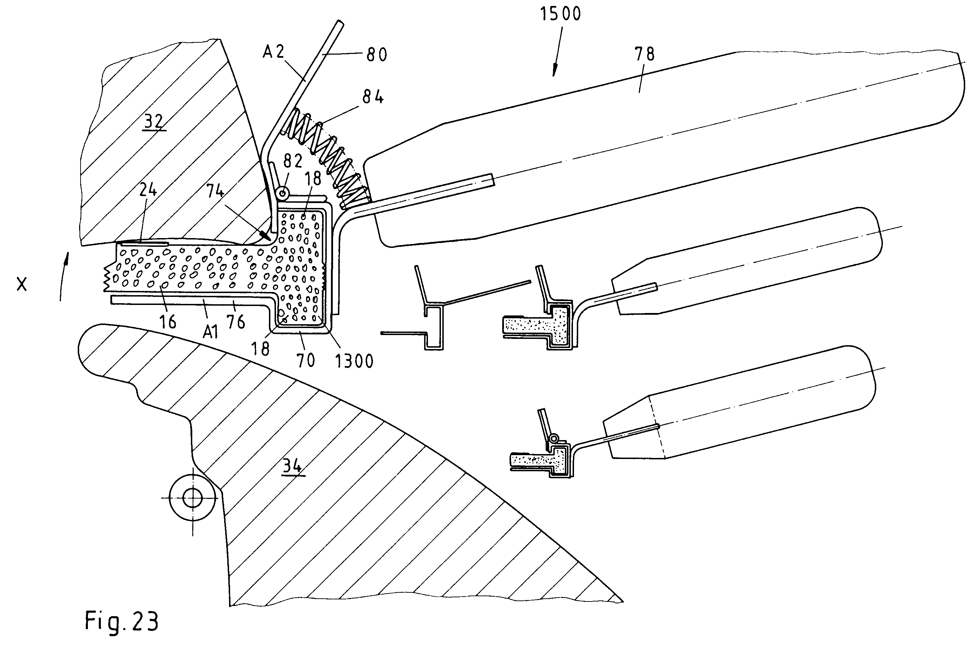

Figur 23 zeigt eine zweite Ausführungsform des erfindungsgemäßen Applikators. Hierbei ist das Griffstück 78 gegenüber dem ersten Anschlag 76 abgewinkelt. Dies erzielt eine zusätzliche Hebelwirkung und vereinfacht die Handhabung des Applikators.

Der zweite Anschlag 80 ist an einem Drehgelenk 82 gehaltert und mittels einer Feder 84 mit einer Kraft beaufschlagt. Diese Anordnung dient dazu, beim Einschieben des Schaumstoffstreifens 1300 den Anschlag 80 zunächst gegen die Federkraft von der Karosserie 32 wegzubiegen. Danach richtet die Federkraft den zweiten Anschlag 80 wieder auf und dieser dient als Einschubhilfe für die kurzen Schenkel 18 in eine Position wie in Figur 22 mit gestrichelten Linien angedeutet.

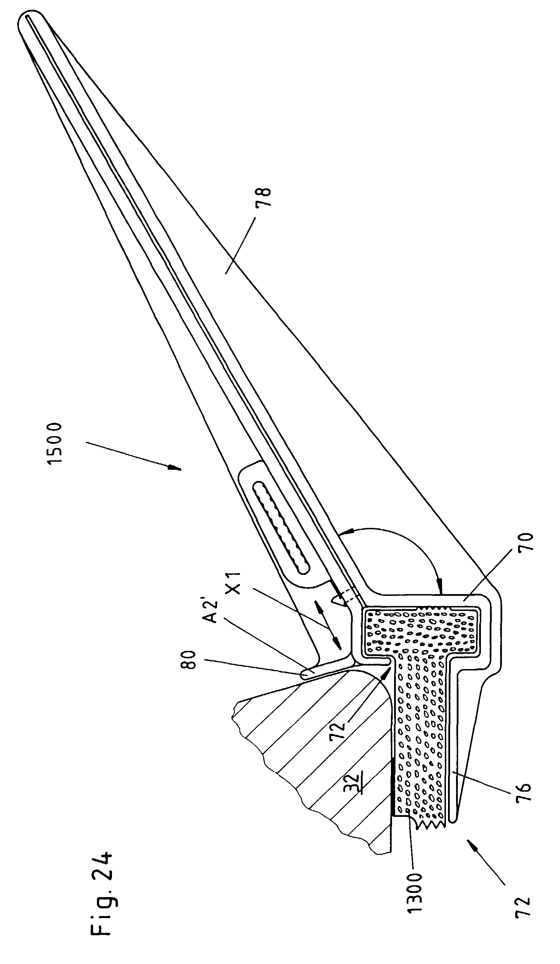

Figur 24 zeigt eine dritte Ausführungsform des erfindungsgemäßen Applikators. Hierbei ist der zweite Anschlag 80 verschiebbar ausgebildet. So kann die Einschubtiefe des Schaumstoffstreifens 1300 variabel voreingestellt werden, je nach den Erfordernissen des abzudichtenden Spalts und des verwendeten Schaumstoffstreifens.

## Patentansprüche

1. Schaumstoffstreifen (100;200;300;400;1300), dessen Oberfläche teilweise mit einer Klebeschicht (24,25) versehen ist,
dadurch gekennzeichnet, daß
der Schaumstoffstreifen (100) an einer vorbestimmten Stelle einen derartigen Knick (14) hat, daß er einen ersten und einen zweiten Schenkel (10,12) aufweist.

2. Schaumstoffstreifen nach Anspruch 1,
dadurch gekennzeichnet, daß
die beiden Schenkel (10,12) gleich lang sind.

3. Schaumstoffstreifen nach Anspruch 1,
dadurch gekennzeichnet, daß
ein Schenkel länger als der andere ist, so daß der Schaumstoffstreifen einen langen Schenkel (16) und einen kurzen Schenkel (18) aufweist.

4. Schaumstoffstreifen nach wenigstens einem der vorstehenden Ansprüche,
dadurch gekennzeichnet, daß
wenigstens einer der Schenkel (10,12) wenigstens eine Verformungsnut (20,21,22,23) aufweist.

5. Schaumstoffstreifen nach Anspruch 4,
dadurch gekennzeichnet, daß
jede der wenigstens einen Verformungsnut (20,21,22, 23) transversal zu beiden Schenkeln (10,12) ausgebildet ist.

6. Schaumstoffstreifen nach Anspruch 4 oder 5,
dadurch gekennzeichnet, daß
wenigstens zwei Verformungsnuten (20,21) vorgesehen sind, die an einem Schenkel (10) auf gegenüberliegenden Seiten und abwechselnd gegeneinander versetzt angeordnet sind.

7. Schaumstoffstreifen nach wenigstens einem der Ansprüche 4 bis 6,
dadurch gekennzeichnet, daß
eine erste Verformungsnut (20) im Bereich des dem Knick zugewandten Endes des entsprechenden Schenkels (10) angeordnet ist.

8. Schaumstoffstreifen nach Anspruch 7,
dadurch gekennzeichnet, daß
die erste Verformungsnut (20) auf der Seite des Schenkels (10) angeordnet ist, die dem anderen Schenkel (12) zugewandt ist.

9. Schaumstoffstreifen nach wenigstens einem der Ansprüche 4 bis 8,
dadurch gekennzeichnet, daß
der die wenigstens eine Verformungsnut (20,21,22,23) tragende Schenkel (16) länger ist, als der andere Schenkel (18).

10. Schaumstoffstreifen nach wenigstens einem der vorstehenden Ansprüche,
dadurch gekennzeichnet, daß
der Knick (14) einen Winkel von kleiner 90 Grad, größer 90 Grad oder genau 90 Grad hat.

11. Schaumstoffstreifen nach wenigstens einem der vorstehenden Ansprüche,
dadurch gekennzeichnet, daß
die Klebeschicht (24) an wenigstens einem Schenkel (10) auf der dem anderen Schenkel (12) zugewandten Seite (28) und/oder der dem anderen Schenkel (12) abgewandten Seite (30) im Bereich des dem Knick (14) abgewandten Endes (26) des entsprechenden Schenkels angeordnet ist.

12. Schaumstoffstreifen nach wenigstens einem der vorstehenden Ansprüche,
dadurch gekennzeichnet, daß
die Klebeschicht (24) am ersten Schenkel (10) auf der dem zweiten Schenkel (12) zugewandten Seite (28) und/oder der dem zweiten Schenkel (12) abgewandten Seite (30) im Bereich des dem Knick (14) abgewandten Endes des entsprechenden Schenkels angeordnet ist.

13. Schaumstoffstreifen nach Anspruch 12,
dadurch gekennzeichnet, daß
der erste Schenkel (16) länger als der zweite Schenkel (18) oder umgekehrt ist.

14. Schaumstoffstreifen nach wenigstens einem der vorstehenden Ansprüche,
dadurch gekennzeichnet, daß
die Klebeschicht (24,28) an beiden Schenkeln (10,12) im Bereich des dem Knick (14) abgewandten Endes der Schenkel (12,14) angeordnet ist, wobei die Klebeschicht (24) an dem ersten Schenkel (10) auf der dem zweiten Schenkel (12) abgewandten Seite (28) angeordnet ist, und die Klebeschicht (25) an dem zweiten Schenkel (12) auf der dem ersten Schenkel (10) zugewandten Seite (30) angeordnet ist.

15. Schaumstoffstreifen nach Anspruch 14,
dadurch gekennzeichnet, daß
der erste Schenkel (16) länger als der Zweite Schenkel (18) oder umgekehrt ist.

16. Schaumstoffstreifen nach wenigstens einem der vorstehenden Ansprüche,
dadurch gekennzeichnet, daß
der Querschnitt beider Schenkel über die gesamte Länge des Schaumstoffstreifens konstant ist.

17. Schaumstoffstreifen nach wenigstens einem der vorstehenden Ansprüche,
dadurch gekennzeichnet, daß
sich wenigstens ein Schenkel (12) beidseitig bezüglich des entsprechenden anderen Schenkels (10) erstreckt.

18. Verwendung des Schaumstoffstreifens, der nach wenigstens einem der vorstehenden Ansprüche ausgebildet ist, zur Spaltabdichtung bzw. als Abdichtungselement, insbesondere zur Abdichtung von Spalten bzw. Fugen zwischen einem feststehenden Karosserieteil und einem beweglichen Karosserieteil von Kraftfahrzeugen.

19. Vorrichtung (1100;1200) zum Einbringen eines Schaumstoffstreifens, der nach wenigstens einem der Ansprüche 1 bis 17 ausgebildet ist, in einen abzudichtenden Spalt oder eine abzudichtende Fuge, insbesondere in eine Spalte bzw. Fuge zwischen einem feststehenden Karosserieteil (32) und einem beweglichen Karosserieteil (34) von Kraftfahrzeugen, bestehend aus einem Stab (40) mit vorbestimmter Breite, die größer ist als die Dicke des Stabes, so daß eine flache Oberseite (42) und Unterseite (44) gebildet wird, wobei auf der Unterseite (44) eine senkrecht zu dieser ausgerichtete Erhebung (46) und an der Oberseite (42) eine diese bedeckende Antihaftschicht (48), insbesondere Silikonpapier, angeordnet ist.

20. Vorrichtung nach Anspruch 19,
dadurch gekennzeichnet, daß
der Abstand zwischen einem Ende des Stabes (50) und der Erhebung (46) etwa der Länge des ersten Schenkels (10) des Schaumstoffstreifens entspricht.

21. Vorrichtung nach Anspruch 20,
dadurch gekennzeichnet, daß
der erste Schenkel (16) länger als der zweite Schenkel (18) ist.

22. Vorrichtung nach Anspruch 20 oder 21,
dadurch gekennzeichnet, daß
an wenigstens einem Ende (50) der Vorrichtung ein Andruckpolster (54) ausgebildet ist.

23. Vorrichtung nach Anspruch 20 oder 21,
dadurch gekennzeichnet, daß
auch die Unterseite (44) mit einer Antihaftschicht (48), insbesondere Silikonpapier, versehen ist.

24. Verfahren zum Einbringen eines Schaumstoffstreifens, der nach wenigstens einem der Ansprüche 1 bis 17 ausgebildet ist, in einen abzudichtenden Spalt oder eine abzudichtende Fuge, insbesondere in eine Spalte bzw. Fuge zwischen einem feststehenden Karosserieteil und einem beweglichen Karosserieteil von Kraftfahrzeugen, mit folgenden Schritten,
(a) Einsetzen des ersten Schenkels in den abzudichtenden Spalt,
(b) Herstellen einer Haftverbindung zwischen dem ersten Schenkel und einer ersten Spaltwandung, insbesondere eines Karosserieteils, und
(c) Einschieben des Zweiten Schenkels in den abzudichtenden Spalt.

25. Verfahren nach Anspruch 24,
gekennzeichnet durch den weiteren Schritt,
(d) Herstellen einer Haftverbindung zwischen dem zweiten Schenkel und einer der ersten Spaltwandung gegenüberliegenden zweiten Spaltwandung.

26. Verfahren nach Anspruch 24 oder 25,
dadurch gekennzeichnet, daß
Schritt (b) folgende Schritte umfaßt,
(b1) Einführen einer Vorrichtung, die nach wenigstens einem der Ansprüche 19 bis 21 ausgebildet ist, in den Spalt zwischen dem zweiten Schenkel und der zweiten Spaltwandung, bis die Erhebung am Spalteingang in Anschlag kommt, und
(b2) Drehen der Vorrichtung um einen Drehpunkt am Anschlag bei der Erhebung, so daß das eingeführte Ende der Vorrichtung den ersten Schenkel gegen die erste Spaltwandung drückt.

27. Verfahren nach wenigstens einem der Ansprüche 24 bis 26,
dadurch gekennzeichnet, daß
Schritt (c) folgende Schritte umfaßt,
(c1) Ansetzen eines Endes einer Vorrichtung nach wenigstens einem der Ansprüche 19 bis 23 an der Knickstelle des Schaumstoffstreifens, und
(c2) Eindrücken der Vorrichtung in den Spalt, so daß der zweite Schenkel in den abzudichtenden Spalt eingeschoben wird.

28. Verfahren nach wenigstens einem der Ansprüche 24 bis 27,
dadurch gekennzeichnet, daß
der erste Schenkel länger als zweite Schenkel ist.

29. Verfahren nach wenigstens einem der Ansprüche 24 bis 28,
dadurch gekennzeichnet, daß
vor Schritt (a) das bewegliche Karosserieteil um 20 Grad bis 50 Grad, insbesondere um 30 Grad bis 45 Grad, insbesondere um 30 Grad oder um 45 Grad geöffnet und nach Schritt (b) wieder geschlossen wird.

30. Anordnung von Schaumstoffstreifen (500;600;700;800; 900;1000;1400), die nach wenigstens einem der Ansprüche 1 bis 17 ausgebildet sind,
dadurch gekennzeichnet, daß
wenigstens zwei Schaumstoffstreifen (100;200;300;400; 1300) derart zueinander ausgerichtet sind, daß das dem Knick (14) abgewandte Ende (26) des ersten Schenkels (10) eines Schaumstoffstreifens jeweils an den Knickbereich (14) eines weiteren Schaumstoffstreifens stößt, wobei die ersten Schenkel (10) der Schaumstoffstreifen zueinander Fluchten, und wobei die Schaumstoffstreifen an diesen Stoßstellen über eine Sollreißbrücke (60) miteinander zu einer Kette verbunden sind.

31. Anordnung nach Anspruch 30,
dadurch gekennzeichnet, daß
diese im Bereich der Stoßstellen Trennkerben (62) aufweist.

32. Anordnung nach Anspruch 30 oder 31,
dadurch gekennzeichnet, daß
der erste Schenkel (16) länger als zweite Schenkel (18) ist.

33. Applikator (1500) zum Einbringen eines Schaumstoffprofils, insbesondere eines T-förmigen Schaumstoffprofils (1300), das an wenigstens einer Seite mit einer Klebeschicht versehen ist, in einen abzudichtenden Spalt oder eine abzudichtende Fuge, insbesondere in eine Spalte bzw.-. Fuge zwischen einem feststehenden Karosserieteil (32) und einem beweglichen Karosserieteil (34) von Kraftfahrzeugen,
dadurch gekennzeichnet, daß
der Applikator (1500) an einem Ende (72) eine Führungsschiene (70) aufweist, die ein dem Klebestreifen abgewandtes Ende des Schaumstoffprofils derart umschließt, daß das Schaumstoffprofil entlang und in der Schiene und vor einem Austritt aus der Schiene in senkrechter Richtung zu dieser gesichert führbar ist, wobei die Schiene einen Längsschlitz (74) aufweist, aus dem ein die Klebeschicht tragendes Ende des Schaumstoffprofils herausragt,
wobei ferner entlang des Längsschlitzes (74) ein erster Anschlag (76) ausgebildet ist, der den aus dem Längsschlitz ragenden Teil des Schaumstoffprofils an einer der Klebeschicht (24) gegenüberliegenden Seite abstützt, und
wobei weiterhin an einer dem Längsschlitz (74) abgewandten Seite der Führungsschiene (70) ein Griffstück (78) angeordnet ist.

34. Applikator nach Anspruch 33,
dadurch gekennzeichnet, daß
an einem der Führungsschiene (70) zugewandten Ende des Griffstücks (78) ein zweiter Anschlag (80) angeordnet ist.

35. Applikator nach Anspruch 34,
dadurch gekennzeichnet, daß
der zweite Anschlag (80) auf dem Griffstück (78) verstellbar ausgebildet ist, so daß der zweite Anschlag (80) bezüglich der Führungsschiene (70) in Richtung des ersten Anschlages (76) verschiebbar ist.

36. Applikator nach wenigstens einem der Ansprüche 33 bis 35,
dadurch gekennzeichnet, daß
das Griffstück (78) bezüglich des ersten Anschlags (76) abgewinkelt ist.

37. Applikator nach wenigstens einem der Ansprüche 33 bis 36,
dadurch gekennzeichnet, daß
an einem der Führungsschiene abgewandten Ende des Griffstückes (78) eine Antihaftschicht (48) angeordnet ist.

38. Applikator nach wenigstens einem der Ansprüche 33 bis 37,
dadurch gekennzeichnet, daß
die Antihaftschicht eine silikonisierte Oberfläche ist.

39. Applikator nach wenigstens einem der Ansprüche 33 bis 38,
dadurch gekennzeichnet, daß
der Applikator (1500) ganz oder teilweise aus Metall und/oder Kunststoff, insbesondere Polyamid, gefertigt ist.

40. Applikator nach wenigstens einem der Ansprüche 33 bis 39,
dadurch gekennzeichnet, daß
der erste und/oder der zweite Anschlag (76,80) mit einem Gleitpolster versehen sind.

41. Applikator nach wenigstens einem der Ansprüche 33 bis 40,
dadurch gekennzeichnet, daß
das Schaumstoffprofil ein Schaumstoffstreifen (100, 200,300,400,1300) ist, der gemäß wenigstens einem der Ansprüche 1 bis 17 ausgebildet ist.
